# EUROPÄISCHE PATENTSCHRIFT

(11) **EP 0 919 274 B1**
(45) Veröffentlichungstag und Bekanntmachung des Hinweises auf die Patenterteilung: **11.06.2003**
(21) Anmeldenummer: 98120237.7
(22) Anmeldetag: 26.10.1998
(51) Int. Cl.: B01D 53/10, B01D 53/12, B01D 53/64, B01D 53/70

(54) **Verfahren zur Reinigung von Abgasen aus Verbrennungsanlagen**
Process for purification of combustion plants exhaust gases
Procédé pour la purification de gaz d'échappement des installations de combustion

(30) Priorität: 25.11.1997 DE 19752157; 10.09.1998 DE 19841513
(43) Veröffentlichungstag der Anmeldung: 02.06.1999
(73) Patentinhaber: MG Technologies AG, 60325 Frankfurt am Main (DE)
(72) Erfinder: Herden, Hansjörg Dr., 63110 Rodgau (DE); Poneleit, Holger Dr., 61350 Bad Homburg (DE); Mayer-Schwinning, Gernot, 61352 Bad Homburg (DE); Zeiler, Frank, 63477 Maintal (DE); Samant, Gurudas Dr., 35112 Fronhausen (DE)
(74) Vertreter: Revesz, Veronika

(56) Entgegenhaltungen:
- EP-A- 0 555 921
- EP-A- 0 638 351
- EP-A- 0 666 098
- US-A- 4 101 631
- US-A- 5 352 647

## Beschreibung

Die Erfindung betrifft ein Verfahren zur Reinigung von sauerstoffhaltigen Abgasen aus Verbrennungsanlagen für Müll, Industrieabfälle und Klärschlamm, bei dem Quecksilber, Quecksilberverbindungen und polychlorierte Dibenzodioxine und/oder Dibenzofurane (PCDD/PCDF) mittels Zeolith aus den Abgasen entfernt werden, indem diese bei einer Gasgeschwindigkeit von 3 bis 20 m/s mit einer Mischung aus natürlich vorkommendem Zeolith während einer Verweilzeit von 0,5 bis 10 s in einer Gas-Feststoff-Suspension zur Reaktion gebracht werden, wobei die mittlere Teilchengröße d₅₀ der Zeolith-Mischung 5 bis 50 µm und die mittlere Suspensionsdichte der Gas-Feststoff-Suspension 0,02 bis 10 kg Feststoff/Nm³ Abgas betragen.

Ein solches, in der EP-B-0 666 098 beschriebenes Verfahren zur Reinigung von Abgasen aus Verbrennungsanlagen hat sich in der Praxis bewährt, gleichwohl besteht die Anforderung, die Reinigung der Abgase insgesamt, insbesondere aber die Reinigung von Quecksilberverbindungen, zu verbessern.

Die Erfindung befaßt sich somit mit der Aufgabe, das eingangs beschriebene Verfahren so zu gestalten, daß die in der 17. BImSchV niedergelegten Grenzwerte für Schadstoffkonzentrationen im Regelfall deutlich unterschritten werden. Das Verfahren muß insbesondere gewährleisten, daß das Reingas eine Quecksilberkonzentration von < 50 µg/Nm³, eine Konzentration an polychlorierten PCDD und PCDF von < 0,1 ng TE/Nm³ und eine Konzentration an PCB, PCP und PCA von insgesamt < 1 µg/Nm³ aufweist (TE = Toxizität-Äquivalente gemäß NATO-Standard).

Die Lösung dieser Aufgabe wird dadurch erreicht, daß eine Zeolith-Mischung gemäß Anspruch 1 und außerdem noch eine oder mehrere schwefelhaltige anorganische Verbindungen ausgewählt aus den Polysulfiden dem Abgas im Temperaturbereich von 80 bis 280°C zugesetzt werden.

In den Patentansprüchen 2 und 3 sind vorzugsweise Ausgestaltung dieser Verfahrensmaßnahme wiedergegeben, wobei insbesondere der Zusatz von Natriumpolysulfid einen wesentlichen Beitrag zur Adsorption von Quecksilberverbindungen leisten.

Bei der Durchführung des erfindungsgemäßen Verfahrens besteht die Möglichkeit, die Polysulfide in Pulverform mit einer mittleren Korngröße d₅₀ von 5 bis 50 µm entweder unabhängig vom Zugabeort der Zeolith-Mischung oder im Gemisch mit der Zeolith-Mischung dem Abgasstrom zuzusetzen.

Gemäß einer weiteren Möglichkeit können die Zeolith-Körner auch mit schwefelhaltigen organischen und/oder anorganischen Verbindungen dotiert sein.

Das erfindungsgemäße Verfahren hat eine besonders gute Adsorptionsleistung, wenn das Abgas bei einer Temperatur von 210 bis 250°C mit einer Mischung aus natürlich vorkommendem Zeolith und Natriumpolysulfid zur Reaktion gebracht wird und wenn die Mischung aus natürlich vorkommendem Zeolith 0,5 bis 25 Gew.-% Na₂S₄, vorzugsweise 5 bis 20 Gew.-% Na₂S₄, enthält. Bei diesen Verfahrensbedingungen werden die vorgenannten Schadstoffkonzentrationen im Reingas nicht nur zuverlässig eingehalten, sondern darüber hinaus unterschritten.

Eine weitere besonders vorteilhafte Ausgestaltung des erfindungsgemäßen Verfahrens ist darin zu sehen, daß die Mischung aus natürlich vorkommendem Zeolith mit 0,1 bis 1 Gew.-% MnSO₄, FeSO₄, CoSO₄, NiSO₄ und CuSO₄ einzeln oder zu mehreren dotiert ist. Das Aufbringen dieser Metallsalze verbessert insbesondere die Quecksilberabscheidung.

Noch im Abgas enthaltene geringe Mengen an sauren Schadstoffen, wie SO₂, HCl und HF werden erfindungsgemäß dadurch abgeschieden, daß die Mischung aus natürlich vorkommendem Zeolith 10 bis 30 Gew.-% CaCO₃, CaO und Ca(OH)₂ einzeln oder zu mehreren enthält. CaCO₃, CaO und Ca(OH)₂ können auch in Form verunreinigter Mischungen eingesetzt werden, wie sie z. B. in einem Sprühabsorber anfallen.

Eine besondere Ausgestaltung des erfindungsgemäßen Verfahrens besteht darin, daß die Reaktion in einer zirkulierenden Wirbelschicht durchgeführt wird, wobei die Gasgeschwindigkeit 3 bis 8 m/s, vorzugsweise 4 bis 5 m/s und die mittlere Suspensionsdichte der Gas-Feststoff-Suspension 2 bis 10 kg Feststoff/Nm³ Abgas betragen. Diese Verfahrensweise ermöglicht auch dann eine zuverlässige Reinigung der bei der Abfallverbrennung anfallenden Abgase, wenn in der Verbrennungsanlage unterschiedliche Abfallmengen verbrannt werden.

Die zirkulierende Wirbelschicht ist als Zirkulationssystem, das aus einem Reaktor, einem Feststoff-Abscheider und einer Feststoff-Rückführleitung besteht, gestaltet. Die zirkulierende Wirbelschicht zeichnet sich dadurch aus, daß im Unterschied zur "klassischen" Wirbelschicht, bei der eine Dichtephase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Gasraum ist bei einer zirkulierenden Wirbelschicht nicht existent; jedoch nimmt innerhalb des Reaktors die Feststoff-Konzentration von unten nach oben ständig ab. Die Betriebsbedingungen einer zirkulierenden Wirbelschicht sind bekanntlich über die Kennzahlen von Froude und Archimedes bestimmt.

Alternativ ist erfindungsgemäß vorgesehen, daß die Reaktion in einem Flugstromreaktor abläuft, wobei die Gasgeschwindigkeit 6 bis 20 m/s und die mittlere Suspensionsdichte der Gas-Feststoff-Suspension 0,1 bis 200 g Feststoff/Nm³ Abgas betragen. Ein Flugstromreaktor kann vorteilhaft bei der Reinigung von kleineren Abgasvolumina zum Einsatz kommen. Der mit den Abgasen aus dem Reaktor der zirkulierenden Wirbelschicht und dem Flugstromreaktor ausgetragene Staub wird über Schlauchfilter und/oder Elektrofilter und/oder Zyklon und/oder Wäscher abgeschieden.

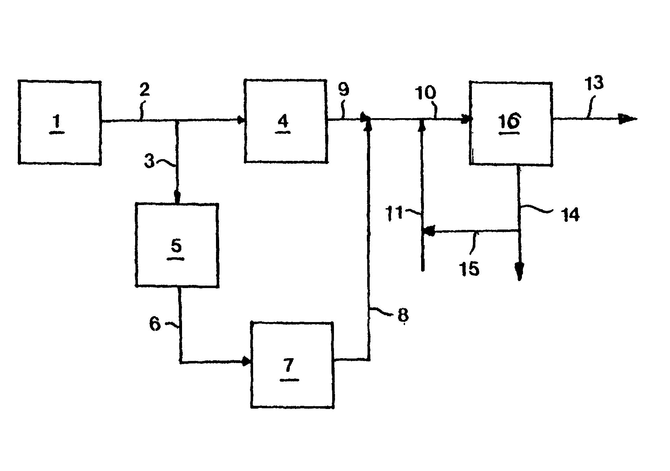

Das erfindungsgemäße Verfahren ist im folgenden anhand eines Ausführungsbeispiels und eines in der Zeichnung wiedergegebenen Grundfließbildes näher erläutert. Aus dem Verbrennungskessel (1) und dem Ofen (1) einer Müllverbrennungsanlage wird jeweils über Leitungen (2) und (3) ein eine Gasgeschwindigkeit von 10 m/s besitzender Rohgasstrom entnommen, der neben Staubpartikeln noch folgende gasförmige Schadstoffe, 2 bis 5 ng TE/Nm³ Dioxin, 100 bis 300 µg/Nm³ Hg, ca. 1000 mg/Nm³ HCl, 200 bis 600 mg/Nm³ SO₂, ca. 10 mg/Nm³ HF und SO₃ enthält und eine Temperatur von 800 bis 1000°C aufweist. Jeder der Rohgasströme wird über Leitungen (2), (3) und (6) einem Verdampfungskühler (4) und (7) mit Funkenabscheider aufgegeben und dabei auf eine Temperatur von ca. 230°C abgekühlt. Dem Verdampfungskühler (7) kann wahlweise ein Abhitzekessel (5) zur Rückgewinnung von Energie vorgeschaltet sein. Die über Leitungen (8), (9) aus den Verdampfungskühlern (4), (7) austretenden Abgasströme werden in der Leitung (10) zusammengeführt. In die Leitung (10) wird über Leitung (11) ein Gemisch aus Zeolith-Mischung und Natriumpolysulfid eingebracht, wobei sich in der Leitung (10) eine Suspension mit einer mittleren Suspensionsdichte von 0,5 bis 6000 kg Feststoff/Nm³ ausbildet. Die Verweilzeit des Gemisches beträgt im Mittel 8 s. Über die Leitung (10) gelangt der abgekühlte und mit Adsorbens beladene Abgasstrom in ein anschließendes Gewebefilter (12), in dem die Feststoffe aus dem Abgasstrom entfernt werden. Darüber hinaus kann eine Nachreaktion von Quecksilber, Quecksilberverbindungen und PCDD und PCDF stattfinden. Die Flugstäube sowie das abreagierte Adsorbens werden über die Leitung (14) aus dem Verfahren ausgeschleust. Nicht abreagiertes Adsorbens kann über die Leitung (15) nach Mischen mit Frischmaterial wieder dem Abgasstrom über die Leitung (11) zugegeben werden. Der so behandelte Rauch wird aus dem Gewebefilter (12) über die Leitung (13) zur Abscheidung weiterer Schadgaskomponenten durch verschiedene Wäscherstufen (16) oder wahlweise über Trockenreinigungsstufen geleitet.

## Patentansprüche

1. Verfahren zur Reinigung von sauerstoffhaltigen, bei der Verbrennung von Müll, Industrieabfällen und Klärschlamm anfallenden Abgasen, bei dem Quecksilber, Quecksilberverbindungen und polychlorierte Dibenzodioxine und/oder Dibenzofurane mittels Zeolith aus den Abgasen entfernt werden, indem diese bei einer Gasgeschwindigkeit von 3 bis 20 m/s mit einer Mischung aus natürlich vorkommendem Zeolith während einer Verweilzeit von 0,5 bis 10 s in einer Gas-Feststoff-Suspension zur Reaktion gebracht werden, wobei die mittlere Teilchengröße d₅₀ der Zeolith-Mischung 5 bis 50 µm und die mittlere Suspensionsdichte der Gas-Feststoff-Suspension 0,02 bis 10 kg Feststoff/Nm³Abgas betragen, wobei die Zeolith-Mischung aus natürlich vorkommendem Zeolith 10 bis 20 Gew.-% Mordenit, 60 bis 70 Gew.-% Clinoptilolit, 0 bis 5 Gew.-% Montmorillonit, Rest SiO₂ enthält und die Zeolith-Mischung sowie eine oder mehrere anorganische schwefelhaltige Verbindungen ausgewähltaus den Polysulfiden dem Abgas bei einer Temperatur von 80 bis 280 °C zugesetzt werden.

2. Verfahren nach Anspruch 1, **dadurch gekennzeichnet, dass** die Temperatur des Abgases 150 bis 260 °C, vorzugsweise 180 bis 250 °C, beträgt.

3. Verfahren nach einem der Ansprüche 1 und 2, **dadurch gekennzeichnet, dass** der Anteil der schwefelhaltigen Verbindungen 0,5 bis 25 Gew.-%, vorzugsweise 5 bis 20 Gew.-%, beträgt.

4. Verfahren nach einem der Ansprüche 1 bis 3, **dadurch gekennzeichnet, dass** die schwefelhaltigen Verbindungen als wässrige. Suspension in den Abgasstrom eingetragen werden.

5. Verfahren nach einem der Ansprüche 1 bis 4, **dadurch gekennzeichnet, dass** die schwefelhaltigen Verbindungen im Gemisch mit der Zeolith-Mischung in den Abgasstrom eingetragen werden.

6. Verfahren nach einem der Ansprüche 1 bis 5, **dadurch gekennzeichnet, dass** die Zeolith-Kömer der einzusetzenden Zeolith-Mischung mit schwefelhaltigen Verbindungen dotiert sind.

7. Verfahren nach einem der Ansprüche 1 bis 6, **dadurch gekennzeichnet, dass** die Mischung aus natürlich vorkommendem Zeolith 10 bis 30 Gew.-% CaCO₃, CaO und Ca(OH)₂ einzeln oder zu mehreren enthält.

8. Verfahren nach einem der Ansprüche 1 bis 7, **dadurch gekennzeichnet, dass** das Gemisch aus Zeolith-Mischung und schwefelhaltigen Verbindungen einer zirkulierenden Wirbelschicht aufgegeben werden, wobei die Gasgeschwindigkeit 3 bis 8 m/s, vorzugsweise 4 bis 5 m/s, und die mittlere Suspensionsdichte der Gas-Feststoff-Suspension 2 bis 10 kg Feststoff/Nm³ Abgas betragen und der Staub über Schlauchfilter und/oder Elektrofilter und/oder Zyklon und/oder Wäscher abgeschieden wird.

9. Verfahren nach einem der Ansprüche 1 bis 8, **dadurch gekennzeichnet, dass** das Gemisch aus Zeolith-Mischung und schwefelhaltigen Verbindungen einem Flugstromreaktor aufgegeben wird, wobei die Gasgeschwindigkeit 6 bis 20 m/s und die mittlere Suspensionsdichte der Gas-Feststoff-Suspension 0,1 bis 200 g Feststoff/Nm³Abgas betragen und der Staub über Schlauchfilter und/oder Elektrofilter und/oder Zyklon und/oder Wäscher abgeschieden wird.

## Claims

1. A process for the purification of oxygen-containing exhaust gases produced by the combustion of refuse, industrial waste and clarification sludge, in which mercury, mercury compounds and polychlorinated dibenzodioxins and/or dibenzofurans are removed from the exhaust gases by means of zeolite, by reacting them at a gas velocity of 3 to 20 m/s with a mixture of naturally-occurring zeolite for a dwell period of 0.5 to 10 sec in a gas/solids suspension, the average particle size d₅₀ of the zeolite mixture being 5 to 50 µm and the average suspension density of the gas/solids suspension being 0.02 to 10 kg solids/sm³ exhaust gas, wherein
the zeolite mixture of naturally-occurring zeolite contains 10 to 20% by weight mordenite, 60 to 70% by weight clinoptilolite, 0 to 5% by weight montmorillonite, remainder SiO₂, and the zeolite mixture and one or more inorganic sulphur-containing compound(s) selected from the polysulphides are added to the exhaust gas at a temperature of 80 to 280°C.

2. A process according to Claim 1, **characterised in that** the temperature of the exhaust gas is 150 to 260°C, preferably 180 to 250°C.

3. A process according to one of Claims 1 and 2, **characterised in that** the content of the sulphur-containing compounds is 0.5 to 25% by weight, preferably 5 to 20% by weight.

4. A process according to one of Claims 1 to 3, **characterised in that** the sulphur-containing compounds are introduced into the stream of exhaust gas as an aqueous suspension.

5. A process according to one of Claims 1 to 4, **characterised in that** the sulphur-containing compounds are introduced into the stream of exhaust gas in a mixture with the zeolite mixture.

6. A process according to one of Claims 1 to 5, **characterised in that** the zeolite grains of the zeolite mixture to be used are doped with sulphur-containing compounds.

7. A process according to one of Claims 1 to 6, **characterised in that** the mixture of naturally-occurring zeolite contains 10 to 30% by weight CaCO₃, CaO and Ca(OH)₂, individually or plurally.

8. A process according to one of Claims 1 to 7, **characterised in that** the mixture of zeolite mixture and sulphur-containing compounds is fed to a circulating fluidised bed system, the gas velocity being 3 to 8 m/s, preferably 4 to 5 m/s, and the average suspension density of the gas/solids suspension being 2 to 10 kg solids/sm³ exhaust gas and the dust is separated off via bag filters and/or electrostatic precipitators and/or cyclones and/or scrubbers.

9. A process according to one of Claims 1 to 8, **characterised in that** the mixture of zeolite mixture and sulphur-containing compounds is fed to an entrained-bed reactor, the gas velocity being 6 to 20 m/s, and the average suspension density of the gas/solids suspension being 0.1 to 200 g solids/sm³ exhaust gas and the dust is separated off via bag filters and/or electrostatic precipitators and/or cyclones and/or scrubbers.

## Revendications

1. Procédé d'épuration de gaz brûlés oxygénés se formant lors de la combustion d'ordures, de déchets industriels et de boues de clarification, dans lequel on élimine des gaz brûlés du mercure, des composés du mercure et des dibenzodioxines et/ou des dibenzofuranes polychlorés au moyen de zéolithe en mettant ces gaz brûlés à une vitesse des gaz de 3 à 20 m/s à réagir sur un mélange de zéolithe d'origine naturelle pendant une durée de séjour de 0,5 à 10 secondes dans une suspension gaz-matières solides, la dimension d₅₀ moyenne des particules du mélange de zéolithe allant de 5 à 50 µm et la masse volumique moyenne de la suspension gaz-matières solides allant de 0,02 à 10 kg de matières solides par m³ de gaz brûlés pris dans les conditions normales de température et de pression, dans lequel
le mélange de zéolithe constitué de zéolithe d'origine naturelle contient de 10 à 20 % en poids de mordénite, de 60 à 70 % en poids de clinoptilolite, de 0 à 5 % en poids de montmorillonite et on ajoute aux gaz brûlés à une température de 80 à 280°C le mélange de zéolithe ainsi qu'un ou plusieurs composé(s) soufré(s) minéral/minéraux choisi(s) parmi les polysulfures.

2. Procédé suivant la revendication 1, **caractérisé en ce que** la température des gaz brûlés est comprise entre 150 et 260°C, de préférence entre 180 et 250°C.

3. Procédé suivant l'une des revendications 1 et 2, **caractérisé en ce que** la proportion des composés soufrés est comprise entre 0,5 et 25 % en poids et de préférence entre 5 et 20 % en poids.

4. Procédé suivant l'une des revendications 1 à 3, **caractérisé en ce que** les composés soufrés sont introduits dans le courant de gaz brûlés sous la forme d'une suspension aqueuse.

5. Procédé suivant l'une des revendications 1 à 4, **caractérisé en ce que** les composés soufrés sont introduits dans le courant de gaz brûlés en mélange avec le mélange de zéolithe.

6. Procédé suivant l'une des revendications 1 à 5, **caractérisé en ce que** les grains de zéolithe du mélange de zéolithe introduit sont dopés par des composés soufrés.

7. Procédé suivant l'une des revendications 1 à 6, **caractérisé en ce que** le mélange de zéolithe d'origine naturelle contient de 10 à 30 % en poids de CaCO₃, de CaO et de Ca(OH)₂ seul ou à plusieurs.

8. Procédé suivant l'une des revendications 1 à 7, **caractérisé en ce que** le mélange de zéolithe et de composés soufrés est chargé dans un lit fluidisé circulant, la vitesse des gaz étant de 3 à 8 m/s, de préférence de 4 à 5 m/s et la densité moyenne de la suspension gaz-matières solides étant comprise entre 2 et 10 kg de matières solides par m³ de gaz brûlés pris dans les conditions normales de température et de pression et la poussière est séparée par un filtre à manche et/ou par un électrofiltre et/ou par un cyclone et/ou par un laser.

9. Procédé suivant l'une des revendications 1 à 8, **caractérisé en ce que** le mélange constitué du mélange de zéolithe et des composés soufrés est chargé dans un réacteur à courant, la vitesse des gaz allant de 6 à 20 m/s et la masse volumique moyenne de la suspension gaz-matières solides allant de 0, à 200 g de matières solides par m³ de gaz brûlés pris dans les conditions normales de température et de pression et la poussière étant séparée par un filtre à manche et/ou par un électrofiltre et/ou par un cyclone et/ou par un laser.
